# EUROPEAN PATENT APPLICATION

(11) **EP 4 647 313 A1**
(43) Date of publication of application: **12.11.2025**
(21) Application number: 24174368.1
(22) Date of filing: 06.05.2024
(51) Int. Cl.: B60W 30/18, B60W 20/19, B60W 50/00, B60W 60/00

(54) **ACCELERATION CONTROL FOR AUTONOMOUS VEHICLE HAVING A TRANSMISSION INCLUDING A PLURALITY OF GEAR-STAGES**

(71) Applicant: VOLVO TRUCK CORPORATION, 405 08 Göteborg (SE)
(72) Inventor: PERSSON, Jonas, 412 58 GÖTEBORG (SE); ÖZKAN, Basar, 417 10 GÖTEBORG (SE); STRÄNGBERG, Erik Martin, 417 66 GÖTEBORG (SE)
(74) Representative: Kransell & Wennborg KB

(57) **Abstract**

A computer system (13) comprising processing circuitry (21) configured to: receive, from an autonomous drive control system (15), an acceleration request (25) encoding a desired acceleration (a_{d}) of an autonomous vehicle (1) having a propulsion source arrangement (17) configured to drive at least one wheel (9) of the autonomous vehicle (1) via a transmission (7) including a plurality of gear-stages; and control the propulsion source arrangement (17) in such a way that the autonomous vehicle (1) accelerates with a greater acceleration than the desired acceleration (a_{d}) during at least one acceleration loss compensation time period (31a-d) being separate from at least one gear-shift time period (29a-b) of at least one gear-shift required to fulfill the acceleration request.

## Description

### TECHNICAL FIELD

The disclosure relates generally to control of an autonomous vehicle. In particular aspects, the disclosure relates to acceleration control for an autonomous vehicle having a transmission including a plurality of gear-stages. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In an autonomous vehicle, an autonomous drive control system may request a desired acceleration (which may be positive or negative) of the vehicle. Under certain circumstances, control of the vehicle towards the desired acceleration may not result in the desired acceleration.

It would be desirable to provide for improved acceleration control of an autonomous vehicle.

### SUMMARY

According to a first aspect of the disclosure, there is provided a computer system comprising processing circuitry configured to: receive, from an autonomous drive control system, an acceleration request encoding a desired acceleration of an autonomous vehicle having a propulsion source arrangement configured to drive at least one wheel of the autonomous vehicle via a transmission including a plurality of gear-stages; and control the propulsion source arrangement in such a way that the autonomous vehicle accelerates with a greater acceleration than the desired acceleration during at least one acceleration loss compensation time period being separate from at least one gear-shift time period of at least one gear-shift required to fulfill the acceleration request. The first aspect of the disclosure may seek to provide for improved acceleration control of an autonomous vehicle. The disclosure is based on the realization that certain acceleration requests, positive as well as negative, may require at least one gear-shift by the transmission of the vehicle, and that this may result in a lower average acceleration than requested by the autonomous drive control system. The present inventors have realized that the vehicle control system may be configured to compensate for this acceleration loss by controlling the propulsion source arrangement in such a way that the vehicle accelerates with an acceleration that is greater (more positive for a desired speed increase and more negative for a desired speed decrease) than the desired acceleration during at least one acceleration loss compensation time period that is separate in time from at least one gear-shift time period of at least one gear-shift required to fulfill the acceleration request. A technical benefit may include to make the autonomous vehicle exhibit a behavior that is closer aligned with the instructions provided by the autonomous drive control system, which provides for improved autonomous drive performance, at least in certain drive situations, such as when accelerating onto a motorway, or when using engine braking and/or regenerative braking.

The propulsion source arrangement may include an ICE (internal combustion engine) and/or an electric machine. The transmission may include at least one gear-box.

Optionally in some examples, including in at least one preferred example, the processing circuitry may be configured to predict that control of the propulsion source arrangement to fulfill the acceleration request would result in at least one gear-shift by the transmission. A technical benefit may include that such a prediction allows for acceleration loss compensation during a longer time, which may provide for improved acceleration loss compensation, and which may allow the use of a lower over acceleration (smaller difference between the actual instantaneous acceleration and the requested desired acceleration). As an alternative or complement to predicting at least one gear-shift, the occurrence of a gear-shift may be registered, and acceleration loss compensation may be performed after completion of the gear-shift.

Optionally in some examples, including in at least one preferred example, the processing circuitry may be configured to control the propulsion source arrangement in such a way that a first acceleration loss compensation time period takes place before a first gear-shift time period of a first gear-shift following receipt of the acceleration request. A technical benefit may include that the acceleration loss compensation can be initiated already before the first gear-shift, which provides for acceleration loss compensation during a longer time, which may provide for improved acceleration loss compensation, and which may allow the use of a lower over acceleration (smaller difference between the actual instantaneous acceleration and the requested desired acceleration).

Optionally in some examples, including in at least one preferred example, the processing circuitry may be configured to receive status data from at least one vehicle system; and predict that control of the propulsion source arrangement to fulfill the acceleration request would result in at least one gear-shift by the transmission, based on the status data. The status data may be any status data from which a gear-shift prediction can be made, such as, for example, a present speed of the vehicle, a desired speed of the vehicle, a present speed of the propulsion source arrangement, and shift-point data from the transmission, etc. The status data may be received by the processing circuitry using wired or wireless communication, such as, through a vehicle communication bus, which may be the widely used CAN-bus.

Optionally in some examples, including in at least one preferred example, the status data may include an indication that a gear shift will take place within a predefined time. Such an indication may, for example, be provided by the transmission in preparation for a gear-shift. A technical benefit may include that implementation of the acceleration loss compensation may be simplified by using a simple indication that may already be available as a basis for determining a timing and/or a magnitude of the acceleration loss compensation.

Optionally in some examples, including in at least one preferred example, the status data may include at least one input indicative of a present state of the autonomous vehicle, such as, a present vehicle speed, and/or a present working point of the propulsion source arrangement, a present gear, etc.

Optionally in some examples, including in at least one preferred example, at least one acceleration loss compensation time period may directly follow the at least one gear-shift time period. A technical benefit may include to provide for acceleration loss compensation during a longer time, which may provide for improved acceleration loss compensation, and which may allow the use of a lower over acceleration (smaller difference between the actual instantaneous acceleration and the requested desired acceleration).

Optionally in some examples, including in at least one preferred example, the processing circuitry may be configured to receive an indication of a duration of the at least one gear-shift time period; and control the propulsion source arrangement in such a way that a magnitude of the acceleration during the at least one acceleration loss compensation time period and/or a duration of the at least one acceleration loss compensation time period depends on the duration of the at least one gear-shift time period. For acceleration loss compensation before a gear-shift, the duration of the gear-shift time period for that gear-shift may be predicted, and for acceleration loss compensation after a gear-shift, the duration of the gear-shift time period may be measured, or a prediction may be used also for the acceleration loss compensation after the gear-shift. A technical benefit may include that a precision of the acceleration loss compensation may be improved, which may, in turn, provide for further improved autonomous drive performance of the autonomous vehicle.

The computer system according to examples of the present disclosure may advantageously be included in a control system for an autonomous vehicle, further comprising an autonomous drive control system in communication with the computer system of the present disclosure, the autonomous drive control system being configured to: send, to the computer system, an acceleration request encoding a desired acceleration of the autonomous vehicle.

The control system according to examples of the present disclosure may advantageously be included in a vehicle, further comprising at least one wheel; a transmission including a plurality of gear-stages, coupled to the at least one wheel; a propulsion source arrangement coupled to the transmission and controllable to drive the at least one wheel via the transmission.

According to a second aspect of the disclosure, there is provided a computer-implemented method comprising receiving, from an autonomous drive control system, an acceleration request encoding a desired acceleration of an autonomous vehicle having a propulsion source arrangement configured to drive at least one wheel of the autonomous vehicle via a transmission including a plurality of gear-stages; and controlling the propulsion source arrangement in such a way that the autonomous vehicle accelerates with a greater acceleration than the desired acceleration during at least one acceleration loss compensation time period being separate in time from at least one gear-shift time period of at least one gear-shift required to fulfill the acceleration request. The second aspect of the disclosure may seek to provide for improved acceleration control of an autonomous vehicle. The disclosure is based on the realization that certain acceleration requests, positive as well as negative, may require at least one gear-shift by the transmission of the vehicle, and that this may result in a lower average acceleration than requested by the autonomous drive control system. The present inventors have realized that vehicle control system may be configured to compensate for this acceleration loss by controlling the propulsion source arrangement in such a way that the vehicle accelerates with an acceleration that is greater (more positive for a desired speed increase and more negative for a desired speed decrease) than the desired acceleration during at least one acceleration loss compensation time period that is separate in time from at least one gear-shift time period of at least one gear-shift required to fulfill the acceleration request. A technical benefit may include to make the autonomous vehicle exhibit a behavior that is closer aligned with the instructions provided by the autonomous drive control system, which provides for improved autonomous drive performance, at least in certain drive situations, such as when accelerating onto a motorway, or when using engine braking and/or regenerative braking.

The propulsion source arrangement may include an ICE (internal combustion engine) and/or an electric machine. The transmission may include at least one gear-box.

Optionally in some examples, including in at least one preferred example, the method may comprise predicting that control of the propulsion source arrangement to fulfill the acceleration request would result in at least one gear-shift by the transmission. A technical benefit may include that such a prediction allows for acceleration loss compensation during a longer time, which may provide for improved acceleration loss compensation, and which may allow the use of a lower over acceleration (smaller difference between the actual instantaneous acceleration and the requested desired acceleration). As an alternative or complement to predicting at least one gear-shift, the occurrence of a gear-shift may be registered, and acceleration loss compensation may be performed after completion of the gear-shift.

Optionally in some examples, including in at least one preferred example, the method may comprise controlling the propulsion source arrangement in such a way that a first acceleration loss compensation time period takes place before a first gear-shift time period of a first gear-shift following receipt of the acceleration request. A technical benefit may include that the acceleration loss compensation can be initiated already before the first gear-shift, which provides for acceleration loss compensation during a longer time, which may provide for improved acceleration loss compensation, and which may allow the use of a lower over acceleration (smaller difference between the actual instantaneous acceleration and the requested desired acceleration).

Optionally in some examples, including in at least one preferred example, the method may comprise receiving status data from at least one vehicle system; and predicting that control of the propulsion source arrangement to fulfill the acceleration request would result in at least one gear-shift by the transmission based on the status data. The status data may be any status data from which a gear-shift prediction can be made, such as, for example, a present speed of the vehicle, a desired speed of the vehicle, a present speed of the propulsion source arrangement, and shift-point data from the transmission, etc. The status data may be received by the processing circuitry using wired or wireless communication, such as, through a vehicle communication bus, which may be the widely used CAN-bus.

Optionally in some examples, including in at least one preferred example, the status data may include an indication that a gear shift will take place within a predefined time. Such an indication may, for example, be provided by the transmission in preparation for a gear-shift. A technical benefit may include that implementation of the acceleration loss compensation may be simplified by using a simple indication that may already be available as a basis for determining a timing and/or a magnitude of the acceleration loss compensation.

Optionally in some examples, including in at least one preferred example, the status data may include at least one input indicative of a present state of the autonomous vehicle, such as, a present vehicle speed, and/or a present working point of the propulsion source arrangement, a present gear-stage, etc.

Optionally in some examples, including in at least one preferred example, at least one acceleration loss compensation time period may directly follow the at least one gear-shift time period. A technical benefit may include to provide for acceleration loss compensation during a longer time, which may provide for improved acceleration loss compensation, and which may allow the use of a lower over acceleration (smaller difference between the actual instantaneous acceleration and the requested desired acceleration).

Optionally in some examples, including in at least one preferred example, the method may comprise receiving an indication of a duration of the at least one gear-shift time period; and controlling the propulsion source arrangement in such a way that a magnitude of the acceleration during the at least one acceleration loss compensation time period and/or a duration of the at least one acceleration loss compensation time period depends on the duration of the at least one gear-shift time period. For acceleration loss compensation before a gear-shift, the duration of the gear-shift time period for that gear-shift may be predicted, and for acceleration loss compensation after a gear-shift, the duration of the gear-shift time period may be measured, or a prediction may be used also for the acceleration loss compensation after the gear-shift. A technical benefit may include that a precision of the acceleration loss compensation may be improved, which may, in turn, provide for further improved autonomous drive performance of the autonomous vehicle.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary computer system according to an example.
**FIG. 3** is an exemplary method according to an example.
**FIG. 4** is an exemplary method according to an example.
**FIG. 5** is an exemplary method according to an example.
**FIG. 6** is an exemplary method according to an example.
**FIG. 7** is an exemplary driving situation where a request for a desired acceleration may result in at least one gear-shift.
**FIG. 8** is an exemplary diagram schematically illustrating acceleration loss compensation according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

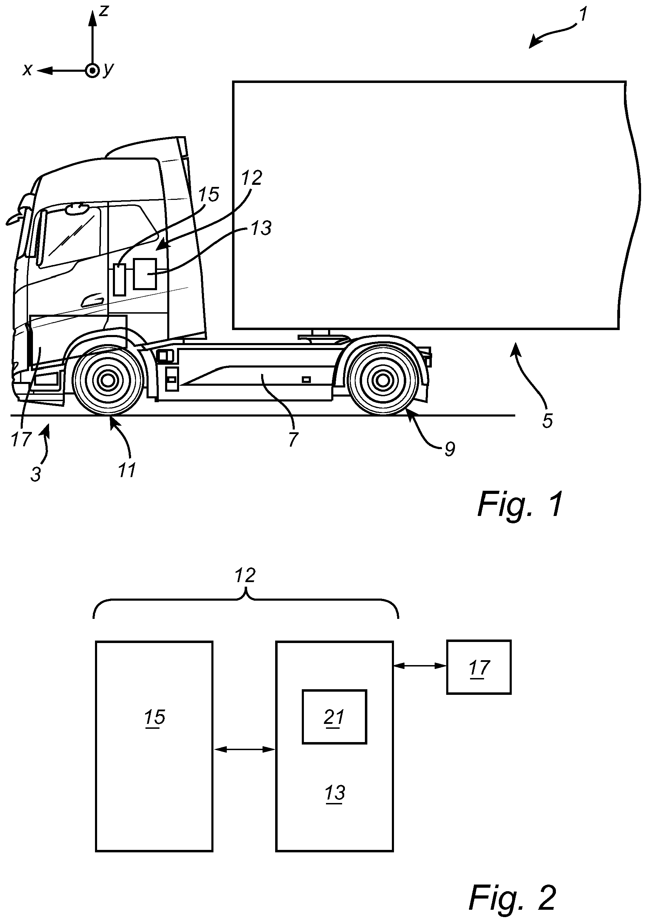

Fig. 1 is an exemplary autonomous vehicle 1 according to an example. Referring to Fig. 1, the exemplary autonomous vehicle 1 comprises a first vehicle member 3 and a second vehicle member 5 coupled to the first vehicle member 3. In this exemplary autonomous vehicle 1, the first vehicle member 3 is a tractor having a propulsion source arrangement 17 in the form of an internal combustion engine (ICE) configured to drive the rear wheels 9 via a transmission 7 including a plurality of gear-stages. It should be noted that the present disclosure is not limited this exemplary autonomous vehicle 1, but applies to many other vehicles, such as vehicles comprising a single vehicle member or vehicles in which the propulsion source arrangement 17 comprises another or an additional propulsion source, such as an electric machine.

Referring again to Fig. 1, the first vehicle member 3 additionally comprises steerable front wheels 11, and a control system 12 for the autonomous vehicle 1, comprising a computer system 13 for controlling vehicle systems, and an autonomous drive control system 15. The autonomous drive control system 15 acts as the "driver" of the autonomous vehicle 1, and controls the vehicle 1 via the computer system 13. The computer system 13, in turn, controls a number of vehicle systems that perform vehicle functions. One example of a vehicle system is a steering system of the vehicle 1, and another example is a braking system, etc. To ensure robust functionality of the autonomous vehicle 1, at least some of the vehicle systems may have redundancy.

Fig. 2 is an exemplary control system 12, comprising a computer system 13 according to an example. Referring to Fig. 2, the control system 12 additionally comprises the above-mentioned autonomous drive control system 15. The computer system 13 comprises processing circuitry 21 configured to communicate with the autonomous drive control system 15, and with the above-mentioned propulsion source arrangement 17. The processing circuitry 21 of the computer system 13 is configured to receive, from the autonomous drive control system 15, an acceleration request encoding a desired acceleration of the autonomous vehicle 1, and control the propulsion source arrangement 17 in such a way that the autonomous vehicle 1 accelerates with a greater acceleration than the desired acceleration during at least one acceleration loss compensation time period being separate from at least one gear-shift time period of at least one gear-shift required to fulfill the acceleration request.

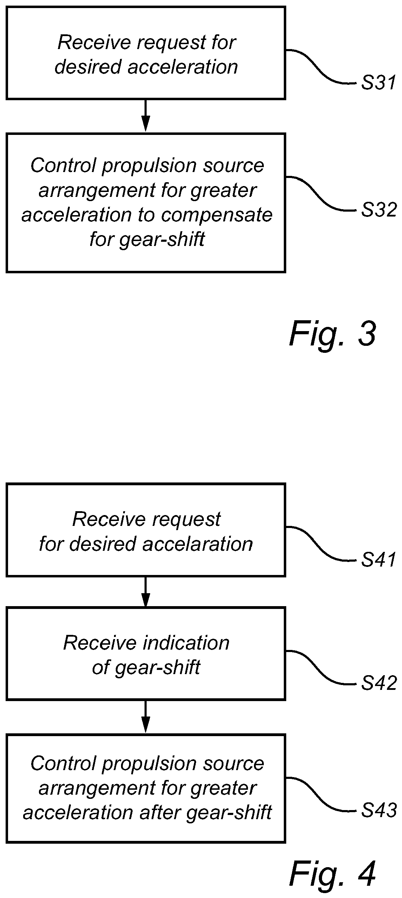

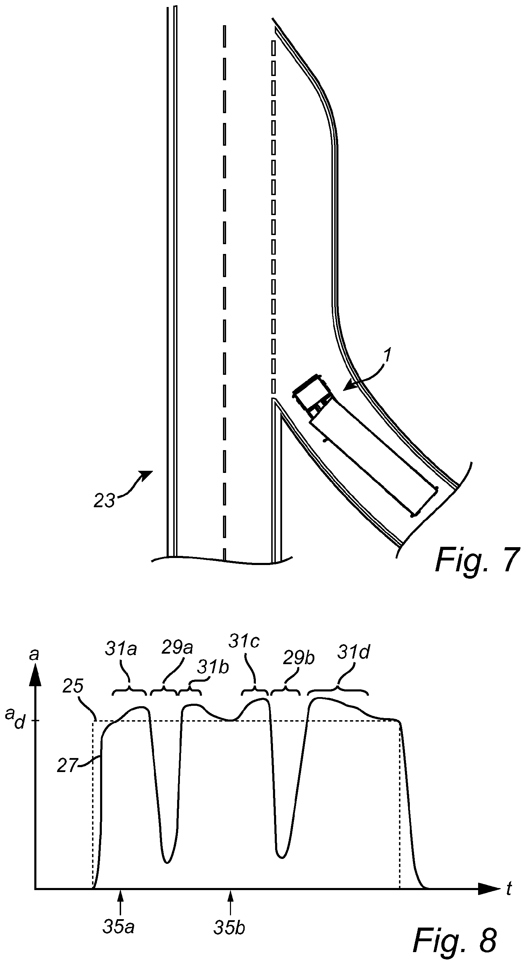

Fig. 3 is an exemplary method according to an example. Referring to the flow-chart in Fig. 3, the method first comprises receiving S31, by the processing circuitry 21 of the computer system 13 in Fig. 2, from the autonomous drive control system 15, an acceleration request encoding a desired acceleration of an autonomous vehicle 1 having a propulsion source arrangement 17 configured to drive at least one wheel 9 of the autonomous vehicle 1 via a transmission 7 including a plurality of gear-stages. The transmission 7 may include at least one gear-box. The acceleration request may, for example, be provided by the autonomous drive control system 15 to accelerate the autonomous vehicle 1 onto a motorway 23, as is schematically indicated in Fig. 7.

Subsequently, the processing circuitry 21 controls S32 the propulsion source arrangement 17 in such a way that the autonomous vehicle 1 accelerates with a greater acceleration than the desired acceleration during at least one acceleration loss compensation time period being separate from at least one gear-shift time period of at least one gear-shift required to fulfill the acceleration request.

Fig. 4 is an exemplary method according to an example. As in the exemplary method described above with reference to the flow-chart in Fig. 3, the method in Fig. 4 first comprises receiving S41, by the processing circuitry 21 of the computer system 13 in Fig. 2, from the autonomous drive control system 15, an acceleration request encoding a desired acceleration of an autonomous vehicle 1 having a propulsion source arrangement 17 configured to drive at least one wheel 9 of the autonomous vehicle 1 via a transmission 7 including a plurality of gear-stages. The acceleration request may, for example, be provided by the autonomous drive control system 15 to accelerate the autonomous vehicle 1 onto a motorway 23, as is schematically indicated in Fig. 7.

Subsequently, the processing circuitry 21 of the computer system 13 receives S42 an indication that a gear-shift has been carried out by the transmission 7.

In response to this indication, the processing circuitry 21 then controls S43 the propulsion source arrangement 17 in such a way that the autonomous vehicle 1 accelerates with a greater acceleration than the desired acceleration during at least one acceleration loss compensation time period taking place after the gear-shift has been carried out by the transmission 7. This will contribute to compensating for the acceleration loss caused by the gear-shift.

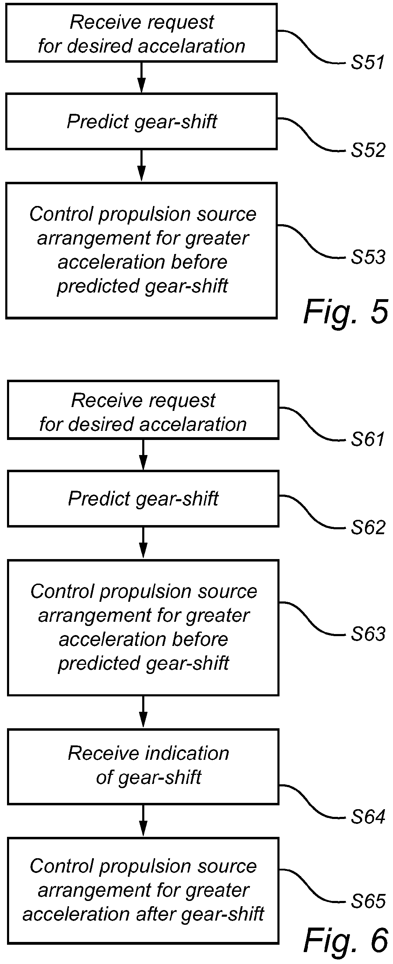

Fig. 5 is an exemplary method according to an example. As in the exemplary methods described above with reference to the flow-chart in Fig. 3 and the flow-chart in Fig. 4, the method in Fig. 5 first comprises receiving S51, by the processing circuitry 21 of the computer system 13 in Fig. 2, from the autonomous drive control system 15, an acceleration request encoding a desired acceleration of an autonomous vehicle 1 having a propulsion source arrangement 17 configured to drive at least one wheel 9 of the autonomous vehicle 1 via a transmission 7 including a plurality of gear-stages. The acceleration request may, for example, be provided by the autonomous drive control system 15 to accelerate the autonomous vehicle 1 onto a motorway 23, as is schematically indicated in Fig. 7.

Subsequently, the processing circuitry 21 of the computer system 13 predicts S52 that control of the propulsion source arrangement 17 to fulfill the acceleration request would result in at least one gear-shift by the transmission 7. The prediction may be based on status data received by the processing circuitry 21. For example, the status data may include an indication, which may be provided by the transmission 7, that a gear-shift will take place within a certain predefined time. According to another example, the status data received by the processing circuitry 21 may include at least one input indicative of a present state of the autonomous vehicle, such as, a present vehicle speed, and/or a present working point of the propulsion source arrangement, a present gear, etc. This status data may, for example, be provided as input data to a computational model, which may output a prediction about at least one gear-shift expected to take place during the acceleration event. The prediction may, for example, include an expected number of gear-shifts and/or an expected timing of the at least one gear-shift.

In response to the prediction resulting from step S52, the processing circuitry 21 then controls S53 the propulsion source arrangement 17 in such a way that the autonomous vehicle 1 accelerates with a greater acceleration than the desired acceleration during at least one acceleration loss compensation time period taking place before the predicted at least one gear-shift. This will contribute to compensating for the acceleration loss caused by the gear-shift.

Fig. 6 is an exemplary method according to an example, which will be described below with additional reference to Fig. 7 and Fig. 8 as indicated. As in the exemplary method described above with reference to the flow-chart in Fig. 5, the method in Fig. 6 first comprises receiving S61, by the processing circuitry 21 of the computer system 13 in Fig. 2, from the autonomous drive control system 15, an acceleration request, indicated by the exemplary acceleration profile 25 in the diagram in Fig. 8. The acceleration request 25 encodes a desired acceleration, indicated by a_{d} in the diagram in Fig. 8, of an autonomous vehicle 1 having a propulsion source arrangement 17 configured to drive at least one wheel 9 of the autonomous vehicle 1 via a transmission 7 including a plurality of gear-stages. The acceleration request may, for example, be provided by the autonomous drive control system 15 to accelerate the autonomous vehicle 1 onto a motorway 23, as is schematically indicated in Fig. 7.

Subsequently, the processing circuitry 21 of the computer system 13 predicts S62 that control of the propulsion source arrangement 17 to fulfill the acceleration request 25 would result in at least one gear-shift by the transmission 7. The prediction may be based on status data received by the processing circuitry 21. For example, the status data may include an indication, schematically indicated by the arrows 35a-b in the diagram in Fig. 8, which may be provided by the transmission 7, that a gear-shift will take place within a certain predefined time. According to another example, the status data received by the processing circuitry 21 may include at least one input indicative of a present state of the autonomous vehicle 1, such as, a present vehicle speed, and/or a present working point of the propulsion source arrangement 17, a present gear, etc. This status data may, for example, be provided as input data to a computational model, which may output a prediction about at least one gear-shift expected to take place during the acceleration event. The prediction may, for example, include an expected number of gear-shifts and/or an expected timing of the at least one gear-shift.

In response to the prediction resulting from step S62, the processing circuitry 21 then controls S63 the propulsion source arrangement 17 in such a way that the autonomous vehicle 1 accelerates with a greater acceleration than the desired acceleration a_{d} during a first acceleration loss compensation time period 31a taking before, and separated from, a first gear-shift time period 29a of the first predicted gear-shift. This will contribute to compensating for the acceleration loss caused by the first gear-shift taking place during the first gear-shift time period 29a.

Subsequently, the processing circuitry 21 of the computer system 13 receives S64 an indication that a gear-shift, represented by the first gear-shift time period 29a in Fig. 8, has been carried out by the transmission 7.

In response to this indication, the processing circuitry 21 then controls S65 the propulsion source arrangement 17 in such a way that the autonomous vehicle 1 accelerates with a greater acceleration than the desired acceleration a_{d} during a second acceleration loss compensation time period 31b taking place after the first gear-shift time period 29a. This will contribute to compensating for the acceleration loss caused by the gear-shift during the first gear-shift time period 29a more evenly, and/or with increased precision, since the compensation carried out before the first gear-shift time period 29a may be taken into account when determining the magnitude and/or duration of the acceleration loss compensation to take place during the second acceleration loss compensation time period 31b.

If the desired acceleration event can take place without additional gear-shifts, the method may be terminated here. Otherwise, steps S62-S65 as described above may take place until the desired acceleration event has been completed. In the example acceleration loss compensation schematically illustrated by Fig. 8, a second indication 35b of an upcoming gear-shift may be received by the processing circuitry 21, and the processing circuitry 21 may control the propulsion source arrangement 17 to provide a higher acceleration during a third acceleration loss compensation time period 31c before a second gear-shift time period 29b, as described above. Further, the processing circuitry 21 may evaluate the acceleration during the second gear-shift time period 29b, and control the propulsion source arrangement 17 to compensate for the acceleration loss during a fourth acceleration loss compensation period 31d taking place after the second gear-shift time period 29b.

In any of the methods described above, the propulsion source arrangement 17 may be controlled in such a way that a magnitude of the acceleration during the at least one acceleration loss compensation time period 31a-d and/or a duration of the at least one acceleration loss compensation time period 31a-d depends on a predicted and/or measured duration of the at least one gear-shift time period 29a-b.

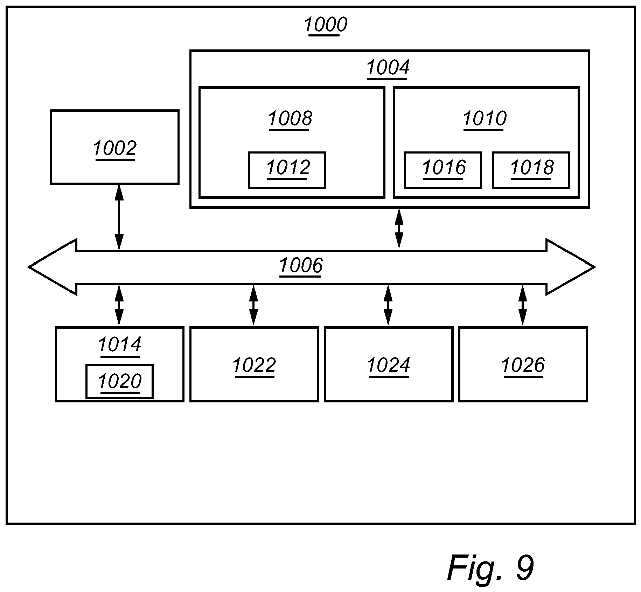

Fig. 9 is a schematic diagram of a computer system 1000 for implementing examples disclosed herein, such as for implementing examples of the computer system 13 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (13) comprising processing circuitry (21) configured to:
receive, from an autonomous drive control system (15), an acceleration request (25) encoding a desired acceleration (a_{d}) of an autonomous vehicle (1) having a propulsion source arrangement (17) configured to drive at least one wheel (9) of the autonomous vehicle (1) via a transmission (7) including a plurality of gear-stages; and
control the propulsion source arrangement (17) in such a way that the autonomous vehicle (1) accelerates with a greater acceleration than the desired acceleration (a_{d}) during at least one acceleration loss compensation time period (3 1a-d) being separate from at least one gear-shift time period (29a-b) of at least one gear-shift required to fulfill the acceleration request.

2. The computer system (13) of claim 1, wherein the processing circuitry (21) is configured to:
predict that control of the propulsion source arrangement (17) to fulfill the acceleration request would result in at least one gear-shift by the transmission (7).

3. The computer system (13) of claim 2, wherein the processing circuitry (21) is configured to:
control the propulsion source arrangement (17) in such a way that a first acceleration loss compensation time period (31a) takes place before a first gear-shift time period (29a) of a first gear-shift following receipt of the acceleration request.

4. The computer system (13) of claim 2 or 3, wherein the processing circuitry (21) is configured to:
receive status data from at least one vehicle system; and
predict that control of the propulsion source arrangement (17) to fulfill the acceleration request (25) would result in at least one gear-shift by the transmission (7) based on the status data.

5. The computer system (13) of claim 4, wherein the status data includes an indication (35a-b) that a gear-shift will take place within a predefined time.

6. The computer system (13) of claim 4 or 5, wherein the status data includes at least one input indicative of a present state of the autonomous vehicle (1).

7. The computer system (13) of any of claims 1-6, wherein at least one acceleration loss compensation time period (31b; 31d) directly follows the at least one gear-shift time period (29a-b).

8. The computer system (13) of any of claims 1-7, wherein the processing circuitry (21) is configured to:
receive an indication of a duration of the at least one gear-shift time period (29a-b); and
control the propulsion source arrangement (17) in such a way that a magnitude of the acceleration during the at least one acceleration loss compensation time period (31b; 31d) and/or a duration of the at least one acceleration loss compensation time period (31b; 31d) depends on the duration of the at least one gear-shift time period (29a-b).

9. A control system (12) for an autonomous vehicle (1), comprising:
the computer system (13) of any of claims 1-8; and
an autonomous drive control system (15) in communication with the computer system (13) of any of claims 1-8, the autonomous drive control system (15) being configured to:
send, to the computer system (13), an acceleration request (25) encoding a desired acceleration (a_{d}) of the autonomous vehicle (1).

10. A vehicle (1), comprising:
at least one wheel (9);
a transmission (7) including a plurality of gear-stages, coupled to the at least one wheel (9);
a propulsion source arrangement (17) coupled to the transmission (7) and controllable to drive the at least one wheel (9) via the transmission (7); and
the control system (12) of claim 9.

11. A computer-implemented method, comprising:
receiving (S31), from an autonomous drive control system (15), an acceleration request (25) encoding a desired acceleration (a_{d}) of an autonomous vehicle (1) having a propulsion source arrangement (17) configured to drive at least one wheel (9) of the autonomous vehicle (1) via a transmission (7) including a plurality of gear-stages; and
controlling (S32) the propulsion source arrangement (17) in such a way that the autonomous vehicle (1) accelerates with a greater acceleration than the desired acceleration (a_{d}) during at least one acceleration loss compensation time period (31a-d) being separate from at least one gear-shift time period (29a-b) of at least one gear-shift required to fulfill the acceleration request (25).

12. The method of claim 11, comprising:
predicting (S52) that control of the propulsion source arrangement (17) to fulfill the acceleration request (25) would result in at least one gear-shift by the transmission (7).

13. The method of claim 12, comprising:
controlling (S53) the propulsion source arrangement (17) in such a way that a first acceleration loss compensation time period (31a) takes place before a first gear-shift time period (29a) of a first gear-shift following receipt of the acceleration request (25).

14. A computer program product comprising program code for performing, when executed by the processing circuitry (21) comprised in the computer system (13) of any one of claims 1-8, the method of any of claims 11-13.

15. A non-transitory computer-readable storage medium comprising instructions, which when executed by the processing circuitry (21) comprised in the computer system (13) of any one of claims 1-8, cause the processing circuitry (21) to perform the method of any of claim 11-13.
